(19) Europäisches Patentamt
European Patent Office
Office européen des brevets

(11) **EP 2 380 752 B1**

(12) **EUROPEAN PATENT SPECIFICATION**

(45) Date of publication and mention
of the grant of the patent:
**26.06.2013 Bulletin 2013/26**

(51) Int Cl.:
***B60B 27/00*** *(2006.01)*

(21) Application number: **11162855.8**

(22) Date of filing: **18.04.2011**

(54) **An asymmetrical wheel hub assembly**

Asymmetrische Radnabenanordnung

Ensemble moyeu de roue asymmetrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2010 IT TO20100329**

(43) Date of publication of application:
**26.10.2011 Bulletin 2011/43**

(73) Proprietor: **Aktiebolaget SKF
415 50 Göteborg (SE)**

(72) Inventor: **Ciulla, Luca
I-10137, TORINO (IT)**

(74) Representative: **Fioravanti, Corrado et al
Jacobacci & Partners S.p.A.
Corso Emilia 8
10152 Torino (IT)**

(56) References cited:
**EP-A2- 1 722 115          WO-A1-2005/008085
US-A1- 2005 111 771     US-A1- 2009 052 823
US-A1- 2009 232 435**

## Description

The present invention relates to an asymmetrical wheel hub assembly.

Asymmetrical wheel hub assemblies of the known type have an axis of rotation and comprise two rows of rolling bodies with pitch diameters of dimensions that differ from one another, an inner flanged ring and an outer ring arranged coaxially with and externally to the inner ring and, for each row of rolling bodies, an inner raceway and an outer raceway obtained, respectively, on the outside of the inner ring and on the inside of the outer ring in positions axially staggered with respect to one another to permit the asymmetrical wheel hub assembly to support combined loads, i.e. loads that act simultaneously in a radial direction and in an axial direction.

With asymmetrical wheel hub assemblies of the type described above, the dimension of the pitch diameter of the row of rolling bodies arranged closest to a flange of the inner flanged ring, i.e. of the row of rolling bodies arranged on the so-called "outboard" side, is greater than the dimension of a diameter of the other row of rolling bodies, i.e. of the row of rolling bodies arranged on the so-called "inboard" side. The geometry just described confers greater rigidity on the asymmetrical wheel hub assembly, especially if compared with a symmetrical wheel hub assembly in which both pitch diameters are identical and their dimensions are the same as the dimensions of the row of rolling bodies on the "inboard" side.

Asymmetrical wheel hub assemblies are used in countless applications in the automobile field, but because of the increasingly restrictive anti-pollution regulations that have come into effect in recent years, it has been necessary to study technological solutions aimed, even indirectly, at reducing both the energy consumption of the vehicles and emissions noxious for the environment such as, for example, carbon monoxide emissions.

US 2009/0232435 A1 discloses a wheel hub assembly as defined in the preamble of claim 1.

The object of the present invention is to provide an asymmetrical wheel hub assembly which, while maintaining high mechanical characteristics and high rigidity, as well as high reliability, permits a significant reduction of consumption and of pollutant emissions.

According to the present invention, there is provided an asymmetrical wheel hub assembly having the features set forth in claim 1. Preferred embodiments are defined in the dependent claims.

The invention will now be described with reference to the attached drawings which illustrate some non-limiting exemplary embodiments, in which:

- figure 1 illustrates, in cross section, a first preferred embodiment of an asymmetrical wheel hub assembly made according to this invention;
- figure 2 is a schematic diagram of the distribution of the loads of the wheel hub assembly in figure 1;

- figure 3 illustrates, in cross section, a second preferred embodiment of an asymmetrical wheel hub assembly of figure 1.

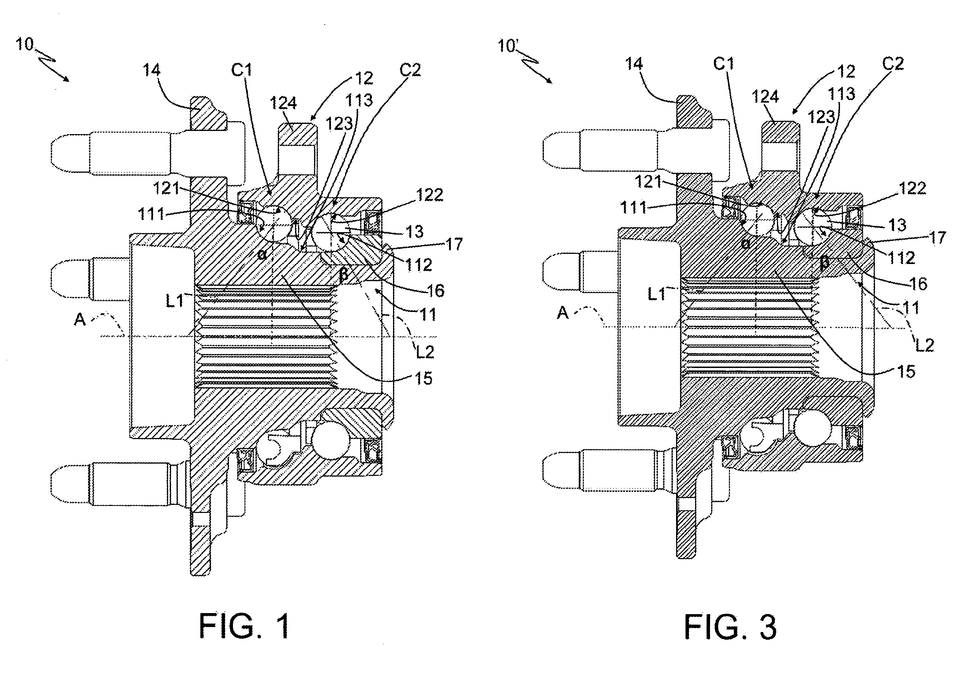

With reference to figure 1, 10 indicates an asymmetrical wheel hub assembly as a whole with an axis A of rotation and comprising an inner ring 11 and an outer ring 12 coaxial with respect to one another and to the axis A of rotation and revolving with respect to one another because of the interposition between them of two rows C1, C2 of rolling bodies 13. In the example described here, the rolling bodies 13 are balls, the centres of which are arranged along respective pitch diameters P1, P2. In the exemplary embodiment illustrated, the dimensions of the pitch diameter P1 of the row C1 are greater than the dimensions of the pitch diameter P2 of the row C2.

Furthermore, the assembly 10 comprises, for each row C1 and C2, an inner raceway 111, 112 and an outer raceway 121, 122 arranged in axially staggered positions to permit the assembly 10 to support combined loads, which act simultaneously both in the radial direction and in the axial direction, and are transmitted between balls 13 and inner raceways 111, 112 and between balls 13 and outer raceways 121, 122 along respective load lines L1, L2. In particular, the load lines L1, L2 join the points of contact between the balls 13 of each row C1, C2 with the associated inner raceways 111, 112 and the associated outer raceways 121, 122, and form respective angles $\alpha$ and $\beta$ of contact with respective lines perpendicular to the axis A in a radial plane.

The inner raceways 111, 112 are obtained outside the inner ring 11, while the outer raceways 121, 122 are obtained directly on an inner surface 123 of the outer ring 12 which, in the exemplary embodiment illustrated, is provided with an outer flange 124 for anchoring the assembly 10 to a vehicle.

The inner ring 11 is an inner flanged ring to permit the attachment of a wheel to the assembly 10, and comprises:

- a flange 14 transversal to the axis A of rotation,
- a spindle 15 that extends along the axis A of rotation and is made of the same material as the flange 14, and
- an applied inner ring 16, which is fitted on the spindle 15, and is axially blocked by a rolled edge 17.

The flange 14 and the ring 16 define, for the assembly 10, the so-called "outboard side" and, respectively, the "inboard side", and the inner raceway 111 of the row C1 is obtained directly on an outer surface 113 of the spindle 15 in the vicinity of the flange 14, while the inner raceway 112 of the row C2 is obtained directly on the applied ring 16. Alternatively, according to a form of embodiment that is not illustrated, the inner raceway 111 of row C1 can be obtained directly on a respective applied ring arranged in an intermediate position between the flange 14 and the ring 16 and axially blocked by the flange 14 and ring 16.

The raceways 111, 112, 121, 122 have respective osculations $O_{xy}$ defined by the ratio between the radiuses r of curvature of the raceways 111, 112, 121, 122 and the outer diameters $\Phi 1$, $\Phi 2$ of the balls 13 of each row C1, C2. In other words, the following osculations are obtained:

$O_{OE}$: ratio between the radius of curvature of the outer raceway 111, outboard side, with the outer diameter $\Phi 1$;
$O_{IE}$: ratio between the radius of curvature of the outer raceway 112, inboard side, and the outer diameter $\Phi 2$;
$O_{OI}$: ratio between the radius of curvature of the inner raceway 121, outboard side, and the outer diameter $\Phi 1$;
$O_{II}$: ratio between the radius of curvature of the inner raceway 122, inboard side, and the outer diameter $\Phi 2$;

In the example of embodiment illustrated, for the purpose of reducing slipping between the balls 13 and the associated raceways 111, 112, 121, 122, i.e. for the purpose of reducing the friction between rolling bodies and raceways and, as a consequence, for the purpose of reducing a possible source of dissipation of energy or for the purpose of reducing consumption and pollutant emissions, in the wheel hub assembly 10, the osculations $O_{OE}$, $O_{OI}$ of the row C1 are different from the respective osculations $O_{IE}$, $O_{II}$ of the row C2. The best performance in terms of reduction of friction is obtained when the wheel hub assembly 10 is made according to any one of the following geometrical conditions:

1) $O_{OE} > O_{IE}$; or
2) $O_{OI} > O_{II}$; or
3) $O_{OE} > O_{IE}$ and $O_{OI} > O_{II}$.

In particular, it was found that the optimum conditions in terms of reduction of friction are obtained when the wheel hub assembly 10 is made according to any one of the following geometrical conditions:

1) $O_{OE} > 1.004 \ O_{IE}$; or
2) $O_{OI} > 1.004 \ O_{II}$; or
3) $O_{OE} > 1.004 \ O_{IE}$ and $O_{OI} > 1.004 \ O_{II}$.

The different osculation of the outboard side compared with the inboard side can be obtained both by varying the radiuses of curvature of the associated raceways 111, 121 of the outboard side compared with the radiuses of curvature of the raceways of the inboard side, or by varying the outer diameters $\Phi 1$, $\Phi 2$ of the balls 13.

In other words, the different osculation of the outboard side compared with the inboard side can be obtained by making a wheel hub assembly 10' as alternatively illustrated in figure 3, in which the outer diameters $\Phi 1$ of the balls 13 of the row C1 do not have the same dimensions as the dimensions of the outer diameters $\Phi 2$ of the balls 13 of the row C2, as in the example of embodiment described above, but in which the outer diameters $\Phi 1$ of the balls 13 of the row C1 have smaller dimensions than those of the outer diameters $\Phi 2$ of the balls 13 of the row C2.

The reduction of the outer diameters $\Phi 1$ of the balls 13 entails, with the same dynamic and structural conditions described above, a reduction of the tangential velocity between the balls 13 and raceways and, therefore, a reduction of the friction.

In addition to the beneficial effects in terms of reduction of the friction between rolling bodies and raceways as described above as an effect of the ratios between the osculations, and again with the same reduction aims, the wheel hub assembly 10 described above, just like the wheel hub assembly 10' with balls 13 of different outer diameters, also has magnitudes of the angles of contact $\alpha$, $\beta$ with dimensions that differ from one another and, in particular, the angle of contact $\alpha$ of the row C1 has a greater magnitude than the magnitude of the contact angle $\beta$ of the row C2.

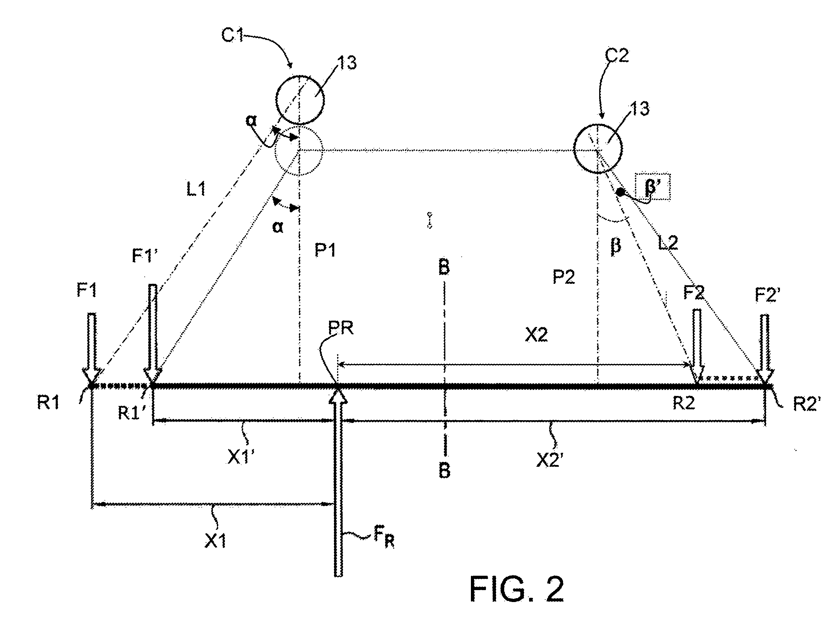

Figure 2 provides a schematic illustration of the load diagram of the wheel hub assembly 10 of this invention in the case in which it is subjected to a wheel load FR applied in correspondence with the centre PR of application arranged along the axis A of rotation.

The rows C1, C2 of the wheel hub assembly 10, subjected to the wheel load FR, react with respective forces F1, .F2 of reaction, which are applied in correspondence with the respective centres R1, R2 of reaction which are identified along the axis A of intersection of the associated lines L1, L2 of force with the axis A, and are at axial distances X1, X2 respectively from the centre PR of application.

In particular, it was found that the optimum conditions in terms of reduction of friction are obtained when the values of the trigonometric tangents of the two angles $\alpha$, $\beta$ of contact are linked by the following relation:

$$tg\beta = tg\alpha * \left[\frac{X2 + X1}{X1} - \frac{X2}{X1} * K\right]$$

where:

$$K = \frac{P1}{P2}$$

With reference to figure 2, if the wheel hub assembly is symmetrical, i.e. with k equal to 1, and if the angles $\alpha$, $\beta'$ of contact have the same magnitude, the forces of reaction, indicated in this case by F1', F2' would be applied in respective centres R1', R2' of reaction at axial distances X1', X2' respectively from the centre PR of application.

Considering the load diagram of the symmetrical wheel hub assembly 10 (k=1), but with different magnitudes of the angles $\alpha$, $\beta$ of contact, i.e. with the magnitude of the angle $\beta$ smaller than the magnitude of the angle $\alpha$ and smaller than the magnitude of the angle $\beta'$ and comparing it with the load diagram of a symmetrical wheel hub assembly and with the same magnitudes of the angles $\alpha$, $\beta$, of contact, the centre R2 of reaction of the force F2 of reaction is displaced to an axial distance X2 that is smaller than the distance X2' with a consequent increase of the intensity of the force F2 of reaction. However, the reduction of the magnitude of the angle $\beta$ of contact gives rise, at kinematic level, to a reduction of the revolution speed of the balls 13 around the axis A with a consequent reduction of the friction between balls 13 and raceways 112, 122.

When, on the other hand, the wheel hub assembly 10 is asymmetrical, i.e. k is greater than one, and the angles $\alpha$, $\beta$ of contact have different magnitudes, the centre R1 of reaction of the force F1 of reaction will be displaced, as compared to the previous case of a symmetrical wheel hub assembly, to an axial distance X1 greater than the distance X1' with a consequent decrease of the intensity of the force F2 of reaction and a better distribution of the forces F1, F2 of reaction without any substantial variation of the speed of revolution of the balls 13 of the row C1 around the axis A. Therefore, in an asymmetrical wheel hub assembly 10, as well as benefitting from greater rigidity, there is also the benefit of better distribution of the forces, thereby allowing the balls 13 of each row C1, C2 to work in better load conditions and with less friction between the raceways and the balls 13 to the complete advantage of consumption and pollutant emissions.

It is intended that the invention not be limited to the embodiments described and illustrated here, which are to be considered as examples of the asymmetrical wheel hub assembly which is, instead, open to further modifications as regards shapes and arrangements of the parts, and constructional and assembly details.

## Claims

1. An asymmetric wheel hub (10) (10') assembly having an axis (A) of rotation and comprises two rows (C1, C2) of rolling bodies (13) with different pitch diameters (P1, P2) and, for each row (C1)(C2) of rolling bodies (13), an inner raceway (111, 112) and an outer raceway (121, 122), which are axially displaced in accordance with a respective angle of contact and along a respective load line (L1, L2) in order to allow the assembly to support combined loads, the raceways of each row (C1)(C2) of rolling bodies (13) being provided with respective osculations which are defined by the ratio between the radius of the raceways and the outer diameters of the rolling bodies (13) of the associated row of rolling bodies (13), wherein the angle of contact and the osculation of a first, outboard side row (C1) of rolling bodies (13) of the two rows (C1, C2) of rolling bodies (13) are different from the angle of contact and, respectively, the osculation of a second, inboard side row (C2) of rolling bodies (13) of the two rows (C1, C2) of rolling bodies (13);

   **characterized in that** the angle of contact of the first, outboard side row (C1) of rolling bodies (13) has an magnitude which is greater than the magnitude of the second, inboard side row (C2) of rolling bodies (13).

2. An asymmetric wheel hub assembly according to Claim 1, **characterized in that** the osculation of the outer raceway (121) of the first row (C1) of rolling bodies (13) has a value which is greater than the value of the osculation of the outer raceway (122) of the second row (C2) of rolling bodies (13).

3. An asymmetric wheel hub assembly according to Claim 2, **characterized in that** the osculation of the outer raceway (121) of the first row (C1) of rolling bodies (13) is 1.004 times greater than the osculation of the outer raceway (122) of the second row (C2) of rolling bodies (13).

4. An asymmetric wheel hub assembly according to Claim 1, 2 or 3, **characterized in that** the osculation of the inner raceway (111) of the first row (C1) of rolling bodies (13) has a value which is greater than the value of the osculation of the inner raceway (112) of the second row (C2) of rolling bodies (13).

5. An asymmetric wheel hub assembly according to Claim 4, **characterized in that** the osculation of the inner raceway (111) of the first row (C1) of rolling bodies (13) is 1.004 times greater than the osculation of the inner raceway (112) of the second row (C2) of rolling bodies (13).

6. An asymmetric wheel hub assembly according to Claim 3 or 5, **characterized in that** the outer diameters of the rolling bodies (13) of the first row (C1) of rolling bodies (13) have sizes which are equal to the sizes of the outer diameters of the rolling bodies (13) of the second row (C2) of rolling bodies (13).

7. An asymmetric wheel hub assembly according to Claim 3 or 5, **characterized in that** the outer diameters of the rolling bodies (13) of the first row (C1) of rolling bodies (13) have sizes which are smaller than the sizes of the outer diameters of the rolling bodies (13) of the second row (C2) of rolling bodies (13).

8. An asymmetric wheel hub assembly according to Claim 1, **characterized in that** first row (C1) of rolling bodies (13) and the second row (C2) of rolling bodies (13) react to a wheel load (FR), which is applied at a pressure centre (PR) located along the axis (A) of rotation, with a first reaction force (F1) and a second reaction force (F2) which are applied by a respective first reaction centre (R1) and by a respective second reaction centre (R2), and that, having defined:

X1: an axial distance between the first reaction centre (R1) and the pressure centre (PR);
X2: an axial distance between the second reaction 10 centre (R2) and the pressure centre (PR);
P1: a pitch diameter of the first row (C1) of rolling bodies (13);
P2: a pitch diameter of the second row (C2) of rolling bodies (13);
$\alpha$: a angle of contact of the first row (C1) of rolling bodies (13);
ß: a angle of contact of the second row (C2) of rolling bodies (13);

the values of the trigonometric tangent of the two angle of contacts $\alpha$ and ß are linked by the following relationship:

$$tg\beta = tg\alpha * \left[ \frac{X2 + X1}{X1} - \frac{X2}{X1} * K \right]$$

where:

$$K = \frac{P1}{P2}.$$

9. An asymmetric wheel hub assembly according to Claim 8, **characterized in that** the pitch diameter (P1) of the first row (C1) of rolling bodies (13) is greater than the pitch diameter (P2) of the second row (C2) of rolling bodies (13).

10. An asymmetric wheel hub assembly according to Claim 9, **characterized in that** it also comprises an inner ring (11) and an outer ring (12) which are coaxial with respect to one another and to the rotation axis (A) and which revolve with respect to one another because of the interposition of the two rows (C1, C2) of rolling bodies (13); the inner raceway (111, 112) and the outer raceway (121, 122) of each row (C1)(C2) of rolling bodies (13) being obtained externally to the inner ring (11) and, respectively, internally to the outer ring (12).

11. An asymmetric wheel hub assembly according to Claim 10, **characterized in that** the inner ring (11) is a flanged ring (11) and is provided with a flange (14) which is transversal to the axis (A) of rotation for fitting a wheel.

12. An asymmetric wheel hub assembly according to Claim 11, **characterized in that** the inner raceway (111) of the first row (C1) of rolling bodies (13) is directly obtained on the outside of the inner ring (11) and close to the flange (14).

13. An asymmetric wheel hub assembly according to Claim 12, **characterized in that** the inner ring (11) comprises a spindle (15), which extends along the axis (A) of rotation and is made of the same material as the flange (14); the inner raceway (111) of the first row (C1) of rolling bodies (13) being directly obtained on an outer surface of the spindle (15).

14. An asymmetric wheel hub assembly according to Claim 13, **characterized in that** the inner ring (11) also comprises an applied inner ring (16) which is fitted on the spindle (15); the inner raceway (112) of the second row (C2) of rolling bodies (13) being directly obtained on the applied inner ring (16).

15. An asymmetric wheel hub assembly according to Claim 14, **characterized in that** the outer raceways of the first and of the second row (C2) of rolling bodies (13) are directly obtained on an inner surface of the outer ring (12).

**Patentansprüche**

1. Asymmetrische Radnabengruppe (10)(10'), die eine Rotationsachse (A) hat und zwei Reihen (C1, C2) von Wälzkörpern (13) mit unterschiedlichen Flankendurchmessern (P1, P2) umfasst sowie für jede Reihe (C1) (C2) von Wälzkörpern (13) einen inneren Laufring (111, 112) und einen äußeren Laufring (121, 122), die gemäß einem jeweiligen Kontaktwinkel und entlang einer jeweiligen Lastlinie (L1, L2) axial verschoben sind, um der Baugruppe zu ermöglichen, kombinierte Lasten abzustützen, wobei die Laufringe jeder Reihe (C1) (C2) von Wälzkörpern (13) mit jeweiligen Schmiegungen versehen sind, welche durch das Verhältnis zwischen dem Radius der Laufringe und den Außendurchmessern der Wälzkörper (13) der zugehörigen Reihe von Wälzkörpern (13) definiert sind, wobei der Kontaktwinkel und die Schmiegung einer ersten Außenseitenreihe (C1) von Wälzkörpern (13) der zwei Reihen (C1, C2) von Wälzkörpern (13) sich vom Kontaktwinkel bzw.

der Schmiegung einer zweiten Innenseitenreihe (C2) von Wälzkörpern (13) der zwei Reihen (C1, C2) von Wälzkörpern (13) unterscheiden; **dadurch gekennzeichnet, dass** der Kontaktwinkel der ersten äußeren Reihe (C1) von Wälzkörpern (13) eine Größe hat, die größer als die Größe der zweiten, inneren Reihe (C2) von Wälzkörpern (13) ist.

2. Asymmetrische Radnabengruppe nach Anspruch 1, **dadurch gekennzeichnet, dass** die Schmiegung des äußeren Laufrings (121) der ersten Reihe (C1) von Wälzkörpern (13) einen Wert hat, der größer als der Wert der Schmiegung des äußeren Laufrings (122) der zweiten Reihe (C2) von Wälzkörpern (13) ist.

3. Asymmetrische Radnabengruppe nach Anspruch 2, **dadurch gekennzeichnet, dass** die Schmiegung des äußeren Laufrings (121) der ersten Reihe (C1) von Wälzkörpern (13) 1,004-mal größer als die Schmiegung des äußeren Laufrings (122) der zweiten Reihe (C2) von Wälzkörpern (13) ist.

4. Asymmetrische Radnabengruppe nach Anspruch 1, 2 oder 3, **dadurch gekennzeichnet, dass** die Schmiegung des inneren Laufrings (111) der ersten Reihe (C1) von Wälzkörpern (13) einen Wert hat, der größer als der Wert der Schmiegung des inneren Laufrings (112) der zweiten Reihe (C2) von Wälzkörpern (13) ist.

5. Asymmetrische Radnabengruppe nach Anspruch 4, **dadurch gekennzeichnet, dass** die Schmiegung des inneren Laufrings (111) der ersten Reihe (C1) von Wälzkörpern (13) 1,004-mal größer als die Schmiegung des inneren Laufrings (112) der zweiten Reihe (C2) von Wälzkörpern (13) ist.

6. Asymmetrische Radnabengruppe nach Anspruch 3 oder 5, **dadurch gekennzeichnet, dass** die Außendurchmesser der Wälzkörper (13) der ersten Reihe (C1) von Wälzkörpern (13) Größen haben, die gleich den Größen der Außendurchmesser (13) der zweiten Reihe (C2) von Wälzkörpern (13) sind.

7. Asymmetrische Radnabengruppe nach Anspruch 3 oder 5, **dadurch gekennzeichnet, dass** die Außendurchmesser der Wälzkörper (13) der ersten Reihe (C1) von Wälzkörpern (13) Größen haben, die kleiner als die Größen der Außendurchmesser (13) der zweiten Reihe (C2) von Wälzkörpern (13) sind.

8. Asymmetrische Radnabengruppe nach Anspruch 1, **dadurch gekennzeichnet, dass** die erste Reihe (C1) von Wälzkörpern (13) und die zweite Reihe (C2) von Wälzkörpern (13) auf eine Radlast (FR) reagieren, die in einem Druckzentrum (PR) entlang der Rotationsachse (A) aufgebracht wird, mit einer ersten Reaktionskraft (F1) und einer zweiten Reaktionskraft (F2), die durch ein jeweiliges erstes Reaktionszentrum (R1) und ein jeweiliges zweites Reaktionszentrum (R2) aufgebracht wird, dass sie Folgendes definiert:

X1: ein axialer Abstand zwischen dem ersten Reaktionszentrum (R1) und dem Druckzentrum (PR);
X2: ein axialer Abstand zwischen dem zweiten Reaktionszentrum (R2) und dem Druckzentrum (PR);
P1: ein Flankendurchmesser der ersten Reihe (C1) von Wälzkörpern (13);
P2: ein Flankendurchmesser der zweiten Reihe (C2) von Wälzkörpern (13);
$\alpha$: ein Kontaktwinkel der ersten Reihe (C1) von Wälzkörpern (13);
$\beta$: ein Kontaktwinkel der zweiten Reihe (C2) von Wälzkörpern (13);

die Werte der trigonometrischen Tangente der zwei Kontaktwinkel $\alpha$ und $\beta$ sind durch die folgende Beziehung miteinander verbunden:

wobei:

$$tg\beta = tg\alpha * \left[\frac{X2 + X1}{X1} - \frac{X2}{X1} * K\right]$$

$$K = \frac{P1}{P2}.$$

9. Asymmetrische Radnabengruppe nach Anspruch 8, **dadurch gekennzeichnet, dass** der Flankendurchmesser (P1) der ersten Reihe (C1) von Wälzkörpern (13) größer als der Flankendurchmesser (P2) der zweiten Reihe (C2) von Wälzkörpern (13) ist.

10. Asymmetrische Radnabengruppe nach Anspruch 9, **dadurch gekennzeichnet, dass** sie auch einen Innenring (11) und einen Außenring (12) umfasst, die koaxial zu einander und zur Rotationsachse (A) sind und die sich wegen des Eingreifens der zwei Reihen (C1, C2) von Wälzkörpern (13) gegeneinander drehen; wobei der innere Laufring (111, 112) und der äußere Laufring (121, 122) jeder Reihe (C1)(C2) von Wälzkörpern (13) extern zum Innenring (11) bzw. intern zum Außenring (12) vorgesehen sind.

11. Asymmetrische Radnabengruppe nach Anspruch 10, **dadurch gekennzeichnet, dass** der Innenring (11) ein Flanschring (11) ist und mit einem Flansch (14) versehen ist, der senkrecht zur Rotationsachse (A) zum Ansetzen eines Rades ist.

**12.** Asymmetrische Radnabengruppe nach Anspruch 11, **dadurch gekennzeichnet, dass** der innere Laufring (111) der ersten Reihe (C1) von Wälzkörpern (13) direkt auf der Außenseite des Innenrings (11) und dicht beim Flansch (14) vorgesehen ist.

**13.** Asymmetrische Radnabengruppe nach Anspruch 12, **dadurch gekennzeichnet, dass** der Innenring (11) eine Spindel (15) umfasst, die sich entlang der Rotationsachse (A) erstreckt und aus demselben Material wie der Flansch (14) hergestellt ist; wobei der innere Laufring (111) der ersten Reihe (C1) von Wälzkörpern (13) direkt auf einer Außenfläche der Spindel (15) vorgesehen ist.

**14.** Asymmetrische Radnabengruppe nach Anspruch 13, **dadurch gekennzeichnet, dass** der Innenring (11) auch einen aufgebrachten Innenring (16) umfasst, der auf der Spindel (15) montiert ist; wobei der innere Laufring (112) der zweiten Reihe (C2) von Wälzkörpern (13) direkt auf dem aufgebrachten Innenring (16) vorgesehen ist.

**15.** Asymmetrische Radnabengruppe nach Anspruch 14, **dadurch gekennzeichnet, dass** die äußeren Laufringe der ersten und der zweiten Reihe (C2) von Wälzkörpern (13) direkt auf einer Innenfläche des Außenrings (12) vorgesehen ist.

**Revendications**

**1.** Ensemble de moyeu de roue asymétrique (10) (10') ayant un axe de rotation (A) et comprenant deux rangées (C1, C2) de corps de roulement (13) ayant des diamètres de pas différents (P1, P2) et, pour chaque rangée (C1) (C2) de corps de roulement (13), un chemin de roulement interne (111, 112) et un chemin de roulement externe (121, 122), qui sont déplacés axialement suivant un angle de contact respectif et le long d'une ligne de charge respective (L1, L2), afin de permettre à l'ensemble de supporter des charges combinées, les chemins de roulement de chaque rangée (C1) (C2) de corps de roulement (13) étant pourvus d'osculations respectives qui sont définies par le rapport entre le rayon des chemins de roulement et les diamètres extérieurs des corps de roulement (13) de la rangée associée de corps de roulement (13), l'angle de contact et l'osculation d'une première rangée latérale extérieure (C1) de corps de roulement (13) des deux rangées (C1, C2) de corps de roulement (13) étant différents de l'angle de contact et, respectivement, de l'osculation d'une deuxième rangée latérale intérieure (C2) de corps de roulement (13) des deux rangées (C1, C2) de corps de roulement (13) ; **caractérisé en ce que** l'angle de contact de la première rangée latérale extérieure (C1) de corps de roulement (13) présente une amplitude qui est supérieure à l'amplitude de la deuxième rangée latérale intérieure (C2) de corps de roulement (13).

**2.** Ensemble de moyeu de roue asymétrique selon la revendication 1, **caractérisé en ce que** l'osculation du chemin de roulement externe (121) de la première rangée (C1) de corps de roulement (13) a une valeur qui est supérieure à la valeur de l'osculation du chemin de roulement externe (122) de la deuxième rangée (C2) de corps de roulement (13).

**3.** Ensemble de moyeu de roue asymétrique selon la revendication 2, **caractérisé en ce que** l'osculation du chemin de roulement externe (121) de la première rangée (C1) de corps de roulement (13) est 1,004 fois supérieure à l'osculation du chemin de roulement externe (122) de la deuxième rangée (C2) de corps de roulement (13).

**4.** Ensemble de moyeu de roue asymétrique selon la revendication 1, 2 ou 3, **caractérisé en ce que** l'osculation du chemin de roulement interne (111) de la première rangée (C1) de corps de roulement (13) a une valeur qui est supérieure à la valeur de l'osculation du chemin de roulement interne (112) de la deuxième rangée (C2) de corps de roulement (13).

**5.** Ensemble de moyeu de roue asymétrique selon la revendication 4, **caractérisé en ce que** l'osculation du chemin de roulement interne (111) de la première rangée (C1) de corps de roulement (13) est 1,004 fois supérieure à l'osculation du chemin de roulement interne (112) de la deuxième rangée (C2) de corps de roulement (13).

**6.** Ensemble de moyeu de roue asymétrique selon la revendication 3 ou 5, **caractérisé en ce que** les diamètres extérieurs des corps de roulement (13) de la première rangée (C1) de corps de roulement (13) ont des dimensions qui sont égales aux dimensions des diamètres extérieurs des corps de roulement (13) de la deuxième rangée (C2) de corps de roulement (13).

**7.** Ensemble de moyeu de roue asymétrique selon la revendication 3 ou 5, **caractérisé en ce que** les diamètres extérieurs des corps de roulement (13) de la première rangée (C1) de corps de roulement (13) ont des dimensions qui sont inférieures aux dimensions des diamètres extérieurs des corps de roulement (13) de la deuxième rangée (C2) de corps de roulement (13).

**8.** Ensemble de moyeu de roue asymétrique selon la revendication 1, **caractérisé en ce que** la première rangée (C1) de corps de roulement (13) et la deuxième rangée (C2) de corps de roulement (13) réagissent à une charge de roue (FR) qui est appliquée au niveau d'un centre de pression (PR) situé le long de l'axe de rotation (A), avec une première force de réaction (F1) et une deuxième force de réaction (F2) qui sont appliquées par un premier centre de réaction respectif (R1) et par un deuxième centre de réaction respectif (R2), et **en ce que**, étant donné
X1 : une distance axiale entre le premier centre de réaction (R1) et le centre de pression (PR) ;
X2 : une distance axiale entre le deuxième centre de réaction (R2) et le centre de pression (PR) ;
P1 : un diamètre de pas de la première rangée (C1) de corps de roulement (13) ;
P2 : un diamètre de pas de la deuxième rangée (C2) de corps de roulement (13) ;
$\alpha$ : un angle de contact de la première rangée (C1) de corps de roulement (13) ;
$\beta$ : un angle de contact de la deuxième rangée (C2) de corps de roulement (13) ;
les valeurs de la tangente trigonométrique des deux angles de contact $\alpha$ et $\beta$ sont liées par la relation suivante :

$$ tg\beta = tg\alpha * \left[ \frac{X2 + X1}{X1} - \frac{X2}{X1} * K \right] $$

avec :

$$ K = \frac{P1}{P2} . $$

**9.** Ensemble de moyeu de roue asymétrique selon la revendication 8, **caractérisé en ce que** le diamètre de pas (P1) de la première rangée (C1) de corps de roulement (13) est supérieur au diamètre de pas (P2) de la deuxième rangée (C2) de corps de roulement (13).

**10.** Ensemble de moyeu de roue asymétrique selon la revendication 9, **caractérisé en ce qu'**il comprend également une bague interne (11) et une bague externe (12) qui sont coaxiales l'une par rapport à l'autre et à l'axe de rotation (A) et qui tournent l'une par rapport à l'autre du fait de l'interposition des deux rangées (C1, C2) de corps de roulement (13) ; le chemin de roulement interne (111, 112) et le chemin de roulement externe (121, 122) de chaque rangée (C1) (C2) de corps de roulement (13) étant obtenus à l'extérieur de la bague interne (11) et respectivement, à l'intérieur de la bague externe (12).

**11.** Ensemble de moyeu de roue asymétrique selon la revendication 10, **caractérisé en ce que** la bague interne (11) est une bague bridée (11) et est pourvue d'une bride (14) qui est transversale à l'axe de rotation (A) pour l'ajustement d'une roue.

**12.** Ensemble de moyeu de roue asymétrique selon la revendication 11, **caractérisé en ce que** le chemin de roulement interne (111) de la première rangée (C1) de corps de roulement (13) est directement obtenu sur l'extérieur de la bague interne (11) et à proximité de la bride (14).

**13.** Ensemble de moyeu de roue asymétrique selon la revendication 12, **caractérisé en ce que** la bague interne (11) comprend une broche (15) qui s'étend le long de l'axe de rotation (A) et qui est fabriquée en le même matériau que la bride (14) ; le chemin de roulement interne (111) de la première rangée (C1) de corps de roulement (13) étant directement obtenu sur une surface extérieure de la broche (15).

**14.** Ensemble de moyeu de roue asymétrique selon la revendication 13, **caractérisé en ce que** la bague interne (11) comprend également une bague interne appliquée (16) qui est ajustée sur la broche (15) ; le chemin de roulement interne (112) de la deuxième rangée (C2) de corps de roulement (13) étant directement obtenu sur la bague interne appliquée (16).

**15.** Ensemble de moyeu de roue asymétrique selon la revendication 14, **caractérisé en ce que** les chemins de roulement externes des première (C1) et deuxième (C2) rangées de corps de roulement (13) sont directement obtenus sur une surface intérieure de la bague externe (12).

FIG. 3

FIG. 1

FIG. 2

EP 2 380 752 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090232435 A1